# NEUE EUROPÄISCHE PATENTSCHRIFT

(11) **EP 1 003 089 B2**
(45) Veröffentlichungstag und Bekanntmachung des Hinweises auf die Entscheidung über den Einspruch: **16.03.2016**
(45) Hinweis auf die Patenterteilung: 19.01.2005
(21) Anmeldenummer: 99122748.9
(22) Anmeldetag: 16.11.1999
(51) Int. Cl.: G05D 23/19, F24F 11/00

(54) **Bedarfsgerechte Wärmeübertragerregelung**
Demand-responsive control for a heat transfer device
Régulation en fonction de la demande pour un dispositif de transfert de chaleur

(30) Priorität: 18.11.1998 DE 19853019
(43) Veröffentlichungstag der Anmeldung: 24.05.2000
(73) Patentinhaber: WILO AG, 44263 Dortmund (DE)
(72) Erfinder: Kettner, Thorsten, 45711 Datteln (DE); Schmitz, Heribert, 35619 Braunfels (DE); Schmalfuss, Horst-Georg, 58540 Meinerzhagen (Valbert) (DE); Richter, Wolfgang, 01109 Dresden (DE)
(74) Vertreter: Cohausz Hannig Borkowski Wißgott

(56) Entgegenhaltungen:
- FR-A- 2 483 579
- FR-A- 2 530 785
- GB-A- 2 065 334
- US-A- 4 307 576
- US-A- 4 335 848
- US-A- 4 407 447
- US-A- 5 394 324
- SENCZEK R. ET AL: 'Ist die Bus-Kommunikation zwischen Pumpen und GLT-Anlagen sinnvoll?' HEIZUNGSJOURNAL März 1995, Seiten 1 - 8

## Beschreibung

Die Erfindung betrifft ein Verfahren zur Steuerung der Temperatur des Mediums eines Heizungs- systems, das zur Temperierung mindestens zweier Verbraucher, beispielsweise zweier Räume eines Gebäudes oder eines Verkehrsmittels, eingesetzt wird, wobei die Temperatur des Mediums von einem aktiven Wärmeübertrager, insbesondere einem Wärmeerzeuger oder einem Kälteerzeuger, erzeugt wird und wobei Zustandsgrößen im System gemessen und die Leistung des Wärmeübertragers aufgrund der gemessenen Zustandsgrößen von einer dem Wärmeübertrager zugeordneten Steuereinheit vorgegeben wird.

Der Einsatz eines solchen Verfahrens ist beispielsweise bei einer bedarfsgeführten Leistungssteuerung von Heizkesseln in Wohnhäusern bekannt. Aus US-A-4 307 576, FR-A-2 483 579 und US-A-4 335 848 sind Verfahren zur Steuerung der Temperatur des Mediums eines Heizungs- oder Kühlsystems bekannt. Bei dieser Art der Steuerung wird dem Heizkessel entweder eine Außentemperatur oder die Temperatur eines für das Wohnhaus repräsentativen Testraumes übermittelt. Anhand der übermittelten Temperatur erkennt der Heizkessel, ob er seine Leistung erhöhen muß, um den Bedarf zu decken, oder ob er die Leistung zurücknehmen kann, weil der Bedarf mehr als gedeckt ist.

Nachteilig an diesem Vefahren ist, daß die Leistungssteuerung lediglich anhand einer punktuell gemessenen Temperatur geschieht. Dadurch kann es beispielsweise möglich sein, daß ein Raum wegen zur Lüftung geöffneter Fenster vollständig auskühlt und nach dem Schließen der Fenster nicht ausreichend erwärmt werden kann, weil die Leistung des Heizkessels wegen der festgestellten hohen Temperatur im Testraum gerade reduziert ist. Andererseits würde die Leistungssteuerung des Kessels mit einem enormen Energieaufwand überreagieren, wenn die Lüftung im Testraum vorgenommen wird. Diese Nachteile kommen besonders bei den mehr und mehr entstehenden Niedrigenergie Häusern zum tragen, deren Heizkesselleistung auf das erforderliche Minimum optimiert ist. Mit dieser bekannten Steuerung ist eine energiesparende und zugleich benutzerfreundliche Regelung der Kesselleistung nahezu ausgeschlossen.

Weiterhin nachteilig an den bekannten Regelungen ist, daß mitunter zwar eine variable Heizkurve in der Form eines lineareren Zusammenhangs zwischen der Außentemperatur und der Vorlauftemperatur eigestellt werden kann, daß diese Einstellung jedoch manuell erfolgen muß. Eine sinnvolle, den Gegebenheiten angepaßte Auswahl einer Steuerkurve ist damit aber nicht möglich.

Aufgabe der vorliegenden Erfindung ist es daher, ein Verfahren zur Steuerung der Temperatur des Mediums eines Heizungs- oder Kühlsystems vorzuschlagen, das bei geringem baulichen und finanziellen Aufwand eine effektive Energienutzung durch eine optimierte Einstellung der Kesseltemperatur ermöglicht.

Diese Aufgabe wird durch das in Anspruch 1 vorgeschlagene Verfahren gelöst.

Als erfindungswesentliches und besonders vorteilhaftes Merkmal ist anzusehen, daß der vom aktiven Wärmeübertrager versorgte Komplex in mehrere separate Einheiten (Verbraucher) aufgeteilt wird, die gegeneinander thermisch abgrenzbar sind. Das erfindungsgemäße Verfahren erfaßt die Charakteristik mehrerer Verbraucher und stellt die Leistung des Wärmeübertragers entsprechend ein. Dazu verarbeitet eine Rechenanlage die gemessenen Zustandsgrößen zusammen mit vorgebbaren Parametern anhand eines Steuerprogrammes und ermittelt den aktuell benötigten Leistungsbedarf des Systems. Entsprechend dem benötigten Leistungsbedarf wird die Leistung des aktiven Wärmeübertrager eingestellt.

Der Wärmeübertrager kann dabei ein Heizkessel und/oder ein Kühlaggregat sein. Unter dem Begriff "Verbraucher" werden in diesem Zusammenhang einzelne Räume subsummiert. Die äußere Umgebung solcher abgeschlossenen Systeme stellt keinen Verbraucher in diesem Sinne dar. Die Brauchwasserversorgung ist ein zusäzlicher Verbraucher. Es sei darauf hingewiesen, daß im folgenden der Begriff "Heizkessel" stellvertretend für Wärmeübertrager im allgemeinen verwendet werden kann.

Als weiteres besonders erfindungswesentliches Merkmal ist die Ausstattung des aktiven Wärmeübertragers mit einer besonders "intelligenten" Steuereinheit anzusehen. Diese Steuereinheit ermöglicht es, anhand gemessener Zustandsgrößen und anhand vorgegebener Parameter eine individuelle Regelung der Heizkesselleistung vorzunehmen. Dazu weist die Steuereinheit vorteilhafterweise eine Rechenanlage, insbesondere einen Microcomputer auf, der die Regelung übernimmt. Solche Mikrokomputer können heutzutage ohne großen Kostenaufwand in den Wärmeübertrager integriert werden.

Von speziellen Sensoren beispielsweise von Temperaturfühlern werden nunmehr bestimmte mit den Räumen in Zusammenhang stehende Zustandsgrößen erfaßt und der Steuereinheit übermittelt. Diese steuert unter Zugrundelegung eines auf den Mikrocomputer geladenen Steuerprogrammes, das neben den ermittelten Zustandsgrößen auch die vorgebbaren Parameter einbezieht, die Leistung des Wärmeübertragers.

Das erfindungsgemäße Verfahren zeichnet sich vorallem durch seine bedarfsgerechte Energieoptimierung aus. Trotz der Reduzierung des Energiebedarfes bietet das Verfahren dennoch die Möglichkeit, durch optimale Temperierung der einzelnen Räume den Komfort für die jeweiligen Nutzer zu erhöhen. Besonders vorteilhaft ist, daß einerseits jedem Raum ein langfristiges Temperaturprofil vorgebbar ist und daß das System andererseits auch auf kurzfristige Änderung der Zustandsgrößen selbständig zu reagieren vermag. So bewerkstelligt ein über das erfindungsgemäße Verfahren gesteuertes Heizsystem eine effektive Schnellaufheizung nach einem plötzlichen Kälteeinbruch in einem Raum. Eine Einstellung der Heizkurve entfällt. Das System optimiert sich nach der Vorgabe der Temperatur in einem Raum selber.

Außerdem ist es von Vorteil, daß durch das Verfahren eine Optimierung nach dem Brennwerteffekt möglich ist. Dazu wird als weiteres Regelkriterium die Minimierung der Rücklauftemperatur vorgegeben. Besonders vorteilhaft läßt sich das erfindungsgemäße Verfahren bei Heizanlagen in Niederenergiehäusern einsetzen, die wegen der kleinen Mengen an zur Verfügung stehender Heizleistung eine besonders geschickte Verteilung der Ressourcen erforderlich machen.

Es ist weiterhin von Vorteil, daß jedes bereits bestehende System auf die Anwendung des erfindungsgemäßen Verfahrens umgerüstet werden kann. Dazu ist es lediglich notwendig, die einzelnen Räume zu definieren, diese mit entsprechenden Sensoren auszustatten und der meist geräteseitig vorhandenen Steuereinheit des Wärmeübertragers eine gewisse Intelligenz zuzuordnen, oder den Wärmeübertrager um eine solche Einheit zu erweitern.

Erfindungsgemäß wird der Steuereinheit der momentan oder in Kürze anfallende Bedarf eines Verbrauchers an Heiz- und/oder Kühlleistung zugeführt werden. Dazu werden die Räume mit dezentral angeordneten Pumpen bestückt. Diese Pumpen, die jeweils einem einzelnen Raum zugeordnet werden und diesen mit Heiz mittel versorgen, melden dem Wärmeübertrager den aktuellen Durchfluß als Maß für den Bedarf. In einer zu bevorzugenden Ausführungsform werden die dezentralen Pumpen mit einer Raumtemperatur geführten Regelung betrieben, so daß eine Pumpe neben dem Bedarf der Kesselsteuerung auch die gemessene Raumtemperatur übermitteln kann. Mit den dezentralen Pumpen ist es möglich und besonders vorteilhaft eine Kommunikation vom Wärmeübertrager zum Raum respektive der dem Raum zugeordneten Pumpe einzurichten. Damit kann die Steuereinheit des Wärmeübertragers selbst die Parameter der Pumpenregelung generieren. Ein solches System bietet große Vorteile hinsichtlich der auf den Energiebedarf gerichteten Optimierung.

Als besonders zu bevorzugende und einfach zu messende Zustandsgrößen werden Temperaturen, insbesondere Innen- und Außentemperaturen registriert. Die Temperaturmessung erfolgt dabei vorteilhafterweise mittels elektrischer Thermoelemente oder mittels der bekannten Widerstandselemente. In einer besonders bevorzugten weil kostengünstigen Ausführungsform des Verfahrens wird die Temperaturmessung mit den in den einzelnen Räumen vorhandenen Thermostaten bewerkstelligt. Das Verfahren berücksichtigt neben den Temperaturen auch Energien von anderen Quellen. Zu diesen automatisch berücksichtigten "inneren" Wärmequellen zählen die Sonneneinstrahlung oder die Aufheizung durch Wärmequellen wie durch elektrisch betriebene Geräte oder Feuerstellen. Auch der meist kühlende Einfluß des Windes wird in Form der Windstärke und der Windrichtung als Zustandsgröße für die Regelung berücksichtigt.

Neben den Größen, die den momentanen Zustand eines Raumes charakterisieren müssen der Regelung Sollgrößen als Parameter vorgegeben werden. Vorteilhafterweise werden dazu der Rechenanlage Abschaltzeiten, beispielsweise im Sommerbetrieb, oder Schwachlastzeiten, beispielsweise für eine Nachtabsenkung, oder aber über längere Zeiträume vorgebbare Last- bzw. Temperaturprofile vorgegeben. Diese Vorgaben können sich auf einzelne Räume oder auf den Wärmeübertrager und damit auf alle Verbraucher gleichzeitig beziehen. Das erfindungsgemäße Verfahren bietet in einer vorteilhaften Ausführungsform die Möglichkeit, die Regelung anhand besonderer Algorithmen vorzunehmen. So ist es möglich, selbstlernende Algorithmen oder unscharfe Regelbedingungen (Fuzzy-Logik) in das Steuerprogramm einzubeziehen. Außerdem ist es möglich, in das Steuerprogramm Algorithmen zu implementieren, die eine Optimierung der Leistung des Wärmeübertragers hinsichtlich des Brennwerteffektes bewirken.

In einer besonders vorteilhaften Ausführungsform werden den Räumen Prioritäten zugeordnet, die der Rechenanlage als weitere Parameter vorgegeben werden. Insbesondere in Verbindung mit dezentralen Pumpen, deren Regelung von der Steuereinheit der Rechenanlage beeinflußt wird, kann über die vergebenen Prioritäten die Versorgung derjenigen Räume mit hohen Prioritäten auch bei Engpässen in der Versorgung sichergestellt werden. In dieser Ausführungsform kann die Steuereinheit anhand der Prioritäten das Verhalten der einzelnen Räume steuern und zu einer weiteren Energieersparnis beitragen.

Das erfindungsgemäße Verfahren wird im folgenden anhand der Zeichnungen näher beschrieben. Es zeigen:
- Figur 1: ein Wohnhaus mit drei Räumen und
- Figur 2: das Regelverhalten des Heizkessels bei Nachtabsenkung und bei Kälteeinbruch (Lüftung) eines Raumes.

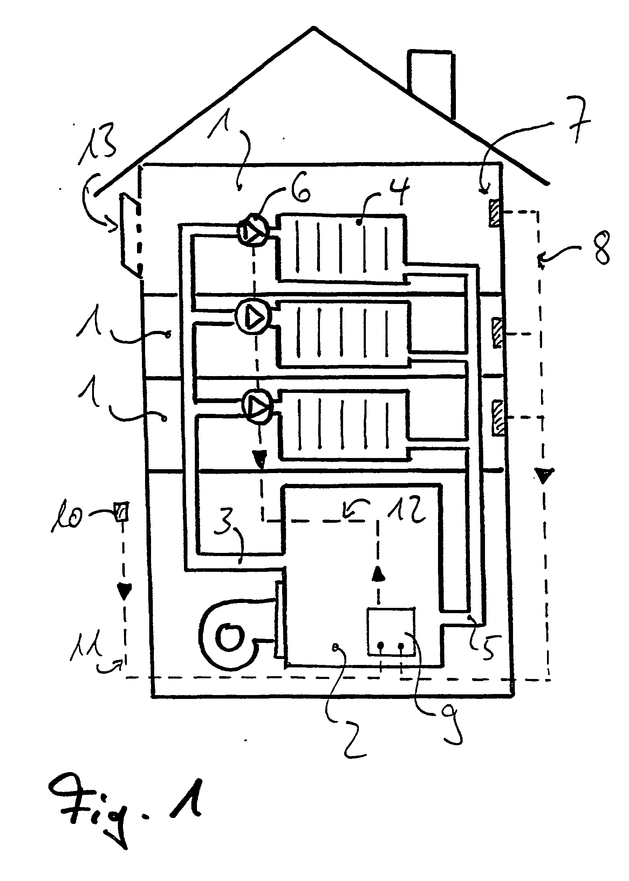

In Figur 1 ist schematisch ein Wohnhaus mit drei Etagen und einem Keller gezeigt. Das Wohnhaus mit mehreren Räumen 1 wird von einer Zentralheizung versorgt, deren Heizkessel 2 mit Brenner sich im Keller befindet. In jedem Raum 1 ist ein über einen Vorlauf 3 an den Heizkessel angeschlossener Heizkörper 4 angeordnet. Der Rücklauf 5 aus allen Heizkörpern mündet wiederum im Heizkessel 2. Der Durchfluß des heißen Wassers durch die Heizkörper wird von elektrisch betriebenen Kreiselpumpen 6 bewerkstelligt, die in diesem vorteilhaften Ausführungsbeispiel dezentral im jeweiligen Vorlauf eines Heizkörpers 4 angebracht sind. Die Pumpen 6 befinden sich direkt am Einlaß des jeweiligen Heizkörpers. Erfindungsgemäß versorgt eine Pumpe jeweils einen Heizkörper. Die Schaltelektronik einer jeden Pumpe 6 beinhaltet eine intelligente Schaltung, welche eine Regelung des Durchflusses nach der Temperatur im Raum 1 ermöglicht.

Mit in den Räumen angeordneten Temperatursensoren 7 werden als Zustandsgrößen die jeweiligen Raumtemperaturen gemessen und über eine Signalleitung 8 einer Steuereinheit 9 des Heizkessels 2 zugeführt. Eine zur Steuereinheit 9 gehörige Rechenanlage verarbeitet die Temperaturen der drei Räume 1 nach Vorgabe entsprechender Parameter anhand eines Steuerprogrammes, das dem Heizkessel 2 die Leistung vorgibt. Der Heizkessel 2 wird im vorliegenden Beispiel bei möglichst geringer Leistung betrieben, die aber dennoch ausreicht, alle drei Räume 1 zu bedienen. Zur Optimierung der Leistung kann der Parameter der Außentemperatur verwendet werden, die über einen Fühler 10 gemessen und der Steuereinheit über die Leitung 11 zugeführt wird.

Im obersten Raum wird in diesem Beispiel das Fenster 13 geöffnet, so daß der Raum auskühlt. Da der Heizkessel mit geringer Leistung heizt, würde die erzeugte Wärmemenge nicht ausreichen, den ausgekühlten Raum schnell aufzuheizen. Da der Temperatursensor 7 oder die dezentrale Pumpe mit zugeordnetem Temperatursensor dem Heizkessel 2 den gesteigerten Bedarf mitteilt, kann dieser seine Leistung erhöhen. Da er über die Leitung 12 in direktem Kontakt zu jeder einzelnen Pumpe 6 steht, könnte er auch den Pumpen der ersten Etagen mitteilen, daß diese für eine gewisse Zeit den Betrieb einstellen, um der Pumpe im obersten Raum genügend Heizmedium zur Verfügung stellen zu können. Die Steuereinheit des Heizkessels übernimmt somit als zentrale Einheit die Organisation der Räume. Über die Leitung 12 melden die Pumpen 7 auch dem Kessel 2 den Bedarf des Raumes an Heizmedium, so daß dieser sich darauf einstellen kann.

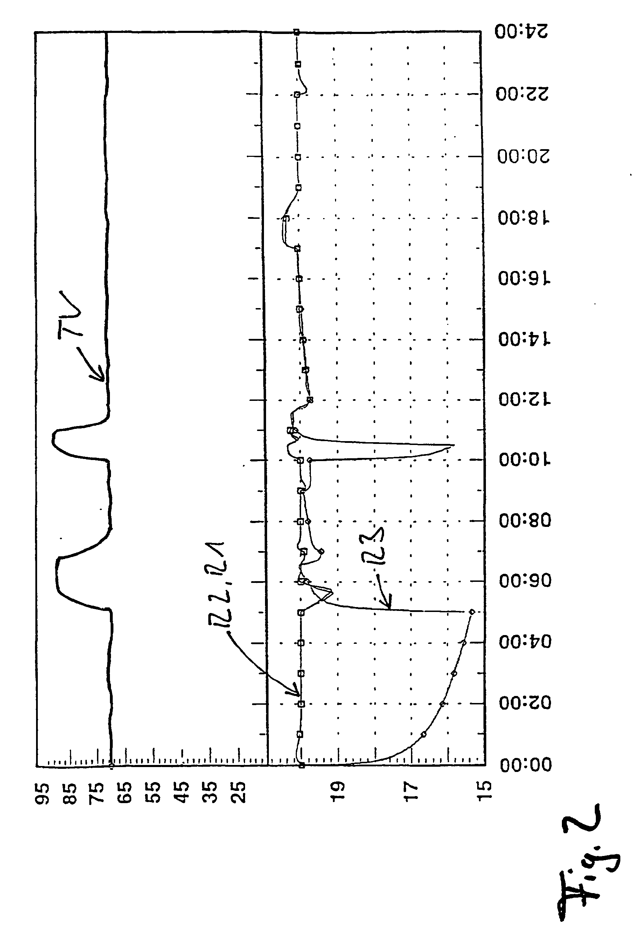

Figur 2 zeigt im unteren Teil den Verlauf der Temperaturen der drei Räume R1, R2 und R3 im Verlaufe eines Tages von 0 Uhr bis 24 Uhr bei einer Außentemperatur von -12°C . In den Diagrammen ist auf der Ordinate die Zeit und auf der Abzisse die Temperatur aufgetragen. Die Raumtemperaturen von R1 und R2 überlagern sich nahezu während des gesamten Tages und werden daher in dem Schaubild nicht aufgelöst. Die Räume werden von dezentralen, jeweils in einem Raum angeordneten Pumpen versorgt. Um 0 Uhr setzt bei Raum R3 die Nachtabsenkung ein, d.h. die dem Raum zugeordnete Pumpe reduziert ihre Drehzahl, bzw. schaltet ab und die Raumtemperatur sinkt von 20°C kontinuierlich.

Um 4 Uhr hat die Raumtemperatur etwa 15°C erreicht und die Nachtabsenkung wird aufgehoben. Die Pumpe schaltet ein und heizt den Raum auf die gewünschten 20°C. Damit die erforderliche Wärmemenge bereitgestellt werden kann, erhöht der Heizkessel die Vorlauftemperatur TV (oberes Schaubild), die gegen etwa 7 Uhr wieder abfällt, wenn in R3 die Solltemperatur erreicht ist. Eine ähnliche Reaktion des Heizkesels ist um 10 Uhr zu beobachten, wo in Raum R3 ein Fenster zur Lüftung geöffnet und nach etwa 30 Minuten wieder geschlossen wird.

Im unteren Schaubild ist zu erkennen, daß die Raumtemperaturen der Räume R1 und R2 um etwa ein Grad sinken, wenn die Pumpe aus R3 nach der Nachtabsenkung wieder einschaltet. Daran läßt sich erkennen, daß dem Raum R3 eine höhere Priorität zugeordnet ist und die vom Kessel bereitgestellte Heizleistung primär für R3 verwendet wird. Sobald im Raum R3 die Solltemperatur erreicht ist, steigt auch in den Räumen R1 und R2 die Temperatur an.

## Patentansprüche

1. Verfahren zur Steuerung der Temperatur des Mediums eines Heizungssystems, das zur Temperierung mindestens zweier thermisch gegeneinander abgegrenzter Verbraucher eingesetzt wird, wobei die Temperatur des Mediums von einem aktiven Wärmeübertrager erzeugt wird und wobei Zustandsgrößen im System gemessen und die Leistung des Wärmeübertragers aufgrund der gemessenen Zustandsgrößen von einer dem aktiven Wärmeübertrager zugeordneten Steuereinheit vorgegeben wird, **dadurch gekennzeichnet, dass**
▪ die Verbraucher einzelne Räume sind,
▪ jedem einzelnen Raum (1) eine separate Pumpe (6) zugeordnet ist, die den Raum (1) mit flüssigem Medium versorgt,
▪ die Durchflüsse der Pumpen (6) als Zustandsgrößen kontinuierlich erfaßt werden und über eine Leitung (12) einer der Steuereinheit (9) zugehörigen Rechenanlage als Rechengröße zugeführt werden,
▪ wobei die Rechenanlage, diese Zustandsgrößen zusammen mit vorgebbaren Parametern anhand eines Steuerprogrammes verarbeitet, den aktuell benötigten Leistungsbedarf ermittelt und dem aktiven Wärmeübertrager (2) die Leistung dem Bedarf entsprechend vorgibt.

2. Verfahren nach Anspruch 1, **dadurch gekennzeiehnet,** dass als weitere Zustandsgrößen Temperaturen und/oder Fremdenergien, beispielsweise Sonneneinstrahlung oder innere Wärmequellen, und/oder der Windeinfluß gemessen werden.

3. Verfahren nach Anspruch 1 oder 2, **dadurch gekennzeichnet, dass** als weitere Zustandsgröße der von einem Raum (1) benötigte Bedarf an Heizleistung der Steuereinheit (9) zugeführt wird.

4. Verfahren nach einem der vorherigen Ansprüche, **dadurch gekennzeichnet, dass** der Rechenanlage als Parameter Abschaltzeiten, Schwachlastzeiten oder über Zeiträume vorgebbare Lastprofile des Wärmeübertragers (2) und/oder einzelner Räume vorgegeben werden.

5. Verfahren nach einem der vorherigen Ansprüche, **dadurch gekennzeichnet, dass** ein Warmwasserkreislauf vom Wärmeübertrager versorgt wird und der Heißwasserbedarf als Zustandsgröße der Steuereinheit (9) zugeführt wird.

6. Verfahren nach einem der vorherigen Ansprüche, **dadurch gekennzeichnet, dass** in das Steuerprogramm Algorithmen implementiert sind, die eine Optimierung der Leistung des Wärmeübertragers (2) hinsichtlich des Brennwerteffektes bewirken.

7. Verfahren nach einem der vorherigen Ansprüche, **dadurch gekennzeichnet, dass** die den Räumen zugeordneten Pumpen Kreiselpumpen sind.

8. Verfahren nach einem der vorherigen Ansprüche, **dadurch gekennzeichnet , dass** dem Raum (1) oder der dem Raum (1) zugeordneten Pumpe (6) von der Steuereinheit (9) des Austauschers (2) generierte Parameter zugeführt werden.

9. Verfahren nach einem der vorherigen Ansprüche, **dadurch gekennzeichnet, dass** den Räumen (1) Prioritäten zugeordnet werden, die der Rechenanlage als weitere Parameter vorgegeben werden.

10. Verfahren nach einem der vorherigen Ansprüche, **dadurch gekennzeichnet, dass** die Steuereinheit (9) anhand der Prioritäten das Verhalten der Räume (1) steuert.

11. Verfahren nach einem der vorherigen Ansprüche, **dadurch gekennzeichnet, dass** der Wärmeübertrager ein Heizkessel ist.

## Claims

1. Method for controlling the temperature of the medium of a heating system used for temperature equalisation between at least two consumers thermally separated from each other, whereby the temperature of the medium is produced by an active heat exchanger and whereby state variables in the system are measured and the output of the heat exchanger is preset by a control unit assigned to the active heat exchanger dependent upon the measured state variables, **characterised in that**
• the consumers are individual rooms,
• a separate decentralised pump (6) is assigned to each individual room (1), which supplies the room (1) with fluid medium and is operated with a room temperature-guided control,
• the flow rates of the pumps (6) are continuously detected as state variables and are fed via a line (12) to a computer system belonging to the control unit (9) as operand,
• and the respective measured room temperatures are fed as state variables via a signal line (8) to the control unit (9),
• whereby the computer system processes these state variables together with presettable parameters based on a control program, determines the currently required output and stipulates the output to the active heat exchanger (2) according to the requirement.

2. Method according to claim 1, **characterised in that** as further state variables, temperatures and/or external energy, such as incoming solar radiation or internal heat sources, and/or the influence of wind are measured.

3. Method according to claim 1 or 2, **characterised in that** as a further state variable, the heat output required by a room (1) is fed to the control unit (9).

4. Method according to one of the previous claims, **characterised in that** switching-off times, low-load times or load profiles of the heat exchanger (2) and/or individual rooms presettable for particular periods are preset as parameters in the computer system.

5. Method according to one of the previous claims, **characterised in that** a hot water circuit is supplied by the heat exchanger and the hot water requirement is fed to the control unit (9) as a state variable.

6. Method according to one of the previous claims, **characterised in that** algorithms are implemented in the control program that bring about optimising of the output of the heat exchanger (2) with regard to the heating value.

7. Method according to one of the previous claims, **characterised in that** the pumps assigned to the rooms are centrifugal pumps.

8. Method according to one of the previous claims, **characterised in that** parameters generated by the control unit (9) of the heat exchanger (2) are fed to the room (1) or the pump (6) assigned to the room (1).

9. Method according to one of the previous claims, **characterised in that** priorities preset in the computer system as further parameters are assigned to the rooms (1).

10. Method according to one of the previous claims, **characterised in that** the control unit (9) controls the behaviour of the rooms (1) according to the priorities.

11. Method according to one of the previous claims, **characterised in that** the heat exchanger is a boiler.

## Revendications

1. Procédé pour la commande de la température du milieu d'un système de chauffage qui est utilisé pour l'équilibrage de température d'au moins deux consommateurs délimités thermiquement réciproquement, la température du milieu étant engendrée par un échangeur de chaleur actif et des grandeurs d'état dans le système étant mesurées et le débit de l'échangeur de chaleur étant prédéfini par une unité de commande adjointe à l'échangeur de chaleur actif sur la base des grandeurs d'état mesurées,
**caractérisé par le fait**
**que** les consommateurs sont des volumes individuels, **qu**'une pompe (6) décentralisée séparée est adjointe à chaque volume (1) individuel, qui alimente le consommateur (1) en milieu fluide et est opérée avec régulation à température ambiante contrôlée,
**que** les débits des pompes (6) sont détectés en continu en tant que grandeurs d'état et amenées en tant que grandeur de calcul, par une ligne (12), à une installation de calcul adjointe à l'unité de commande (9),
et les températures ambiantes mésurées en chaque cas sont amenées en tant que grandeurs d'état, par une ligne (8) de signal, à l'unité de commande (9),
l'unité de calcul traitant ces grandeurs d'état en commun avec des paramètres pouvant être prédéfinis, à l'aide d'un programme de commande qui détermine la demande de puissance nécessitée instantanément et prédéfinit la puissance à l'échangeur de chaleur (2) actif en correspondance de la demande.

2. Procédé selon la revendication 1,
**caractérisé par le fait que** des températures et/ou des énergies extérieures, par exemple l'irradiation solaire ou des sources de chaleur internes, et/ou l'influence du vent sont mesurées en tant que grandeurs d'état supplémentaires.

3. Procédé selon la revendication 1 ou 2,
**caractérisé par le fait que** la demande de puissance de chauffage nécessitée par un volume (1) est envoyée à l'unité de commande (9) en tant que grandeur d'état supplémentaire.

4. Procédé selon l'une des revendications précédentes,
**caractérisé par le fait que** des périodes de mise hors circuit, des périodes creuses ou des profils de charge de l'échangeur de chaleur (2) et/ou de volumes individuels pouvant être prédéfinis sur des intervalles de temps sont affectés à l'unité de calcul en tant que paramètres.

5. Procédé selon l'une des revendications précédentes,
**caractérisé par le fait qu'**un circuit d'eau chaude est alimenté par l'échangeur de chaleur et là demande d'eau chaude est envoyée à l'unité de commande (9) en tant que grandeur d'état.

6. Procédé selon l'une des revendications précédentes,
**caractérisé par le fait que** des algorithmes, qui produisent une optimisation de la puissance de l'échangeur de chaleur (2) par rapport à l'effet de puissance calorifique, sont mis en oeuvre dans le programme de commande.

7. Procédé selon l'une des revendications précédentes,
**caractérisé par le fait que** les pompes adjointes aux volumes sont des pompes centrifuges.

8. Procédé selon l'une des revendications précédentes,
**caractérisé par le fait que** des paramètres générés par l'unité de commande (9) de l'échangeur (2) sont envoyés au volume (1) ou à la pompe (6) adjointe au volume (1).

9. Procédé selon l'une des revendications précédentes,**caractérisé par le fait que** des priorités sont adjointes aux volumes (1) et sont affectées en tant que paramètres supplémentaires à l'unité de calcul.

10. Procédé selon l'une des revendications précédentes,
**caractérisé par le fait que** l'unité de commande (9) commande le comportement du volume (1) à l'aide des priorités.

11. Procédé selon l'une des revendications précédentes,
**caractérisé par le fait que** l'échangeur de chaleur est une chaudière de chauffage.
